# EUROPÄISCHE PATENTSCHRIFT

(11) **EP 2 183 838 B1**
(45) Veröffentlichungstag und Bekanntmachung des Hinweises auf die Patenterteilung: **10.09.2014**
(21) Anmeldenummer: 08784954.3
(22) Anmeldetag: 22.07.2008
(51) Int. Cl.: H02K 5/20

(54) **LÜFTERHAUBE, UMRICHTERMOTOR UND BAUREIHE VON UMRICHTERMOTOREN**
FAN SHROUD, CONVERTER MOTOR AND SERIES OF CONVERTER MOTORS
CAPOT DE VENTILATEUR, MOTEUR À CONVERTISSEUR ET GAMME DE MOTEURS À CONVERTISSEUR

(30) Priorität: 24.07.2007 DE 102007034913
(43) Veröffentlichungstag der Anmeldung: 12.05.2010
(73) Patentinhaber: SEW-EURODRIVE GmbH & Co. KG, 76646 Bruchsal (DE)
(72) Erfinder: DREXLER, Mario, 74889 Sinsheim (DE); TESCH, Sven, 76698 Ubstadt-Weiher (DE)
(86) Internationale Anmeldenummer: PCT/EP2008/005990
(87) Internationale Veröffentlichungsnummer: WO 2009/012972

(56) Entgegenhaltungen:
- EP-A- 0 456 169
- EP-A- 0 681 360
- WO-A-2006/108550
- FR-A- 2 608 332
- US-A- 5 763 969

## Beschreibung

Die Erfindung betrifft eine Lüfterhaube, einen Umrichtermotor und eine Baureihe von Umrichtermotoren.

Unter Umrichtermotor wird in dieser Schrift eine elektrisch betriebene Antriebseinheit verstanden, die zumindest eine Motoreinheit und eine elektronische Baugruppe, die Umrichtereinheit, zur Ansteuerung der Motoreinheit, insbesondere zur Regelung der Drehzahl und/oder des Drehmoments, umfasst. Die Motoreinheit kann hierbei einen permanenterregten Rotor, einen Käfigläufer oder eine Kombination von beidem umfassen oder als Außenläufer ausgebildet sein.

Aus FR 2 608 32 A ist ein Elektromotor mit einem Frequenzumrichter zur Regelung von Funktionsparametern des Motors mit einer Lüfterhaube nach dem Oberbegriff von Anspruch 1 bekannt. Die Lüfterhaube ist einteilig-topfförmig.ausgebildet und weist im Inneren keine Hervorhebungen auf.

Aus EP 0 681 360 A2 ist ein Kompaktantrieb aus Motor und Steuerung bekannt, wobei eine Trägerbraugruppe vorhanden ist, die eine Steuerungsbaugruppe trägt und gleichzeitig als Leitsystem für einen Kühlluftstrom ausgebildet ist.

Aus US 5 763 969 A ist ein integriertes System aus Elektromotor und Antrieb mit einem Hilfskühlmotor und einer asymmetrischen Wärmesenke bekannt

Aus EP 0 456 169 A1 ist ein frequenzumrichtergespeister Elektromotor bekannt, wobei die innerhalb eines Leistungsteils in einem Klemmenkasten entstehende Abwärme durch eine Gehäusedurchbrechung an der Unterseite des Klemmenkastens abgeführt wird.

Aus WO2006/108550A1 ist ein Elektromotor bekannt, bei welchem Befestigungsmittel als stromlinienförmige Verdickungen von Kühlrippen ausgeführt sind.

Der Erfindung liegt die Aufgabe zugrunde, die Herstellungskosten für einen Umrichtermotor zu senken.

Erfindungsgemäß wird die Aufgabe bei der Lüfterhaube nach den in Anspruch 1 angegebenen Merkmalen und, bei dem Umrichtermotor nach den in Anspruch 7 angegeben Merkmalen angegebenen Merkmalen gelöst.

Wichtige Merkmale der Erfindung einer Lüfterhaube sind, dass ein erstes rohrförmiges Teil an einem axialen Ende durch einen Deckel verschlossen ist und am ersten rohrförmigen Teil ein Anschlusskasten, insbesondere seitlich, ausgebildet ist. Mit rohrförmig wird in dieser Schrift allgemein ein im Wesentlichen um eine Achse diskret oder kontinuierlich drehsymmetrisch, im Inneren hohl und insgesamt mit einer im Vergleich zum Durchmesser dünnen Wandstärke versehen ausgebildetes Teil bezeichnet. Eine Lüfterhaube wird geteilt in ein erstes rohrförmiges Teil, die Seitenwand, und einen Deckel. Die Seitenwand der Lüfterhaube ist somit vorteilhaft aus einem anderen Material fertigbar als der Deckel. Beispielsweise ist für die Seitenwand ein metallischer Werkstoff verwendbar und für den Deckel Kunststoff. Die Seitenwand ist daher zur Wärmeleitung nutzbar, während die Fertigung des Deckels aus Kunststoff eine Gewichtsreduzierung und eine Reduzierung der Materialkosten bewirkt. Vorzugsweise ist das rohrförmige Teil aus Aluminiumguss hergestellt und stabil gegen Verformungen ausgebildet. Weiter ist der Anschlusskasten an der Lüfterhaube befestigt und vorteilhaft in die Eigenlüftung eines Motors integriert. Der Anschlusskasten kann daher vorteilhaft die Elektronik eines Umrichters aufnehmen, die durch die Integration des Anschlusskastens in die Lüfterhaube entwärmt wird. Somit ist die Entwärmung eines Umrichtermotors durch den Einsatz einer erfindungsgemäßen Lüfterhaube verbessert. Eine zusätzliche Ausbildung von Kühlrippen oder ein zusätzlicher Lüfter für die Elektronikkühlung sind verzichtbar, und die Herstellungskosten werden reduziert. Durch die mehrteilige Ausbildung ist der Deckel bei Bedarf zur Wartung abnehmbar oder sogar ersetzbar durch eine Motoranbauoption. Es ist also eine Baureihe bildbar, wobei durch die Wiederverwendung von Teilen, hier dem Gehäuse, der Motoreinheit und der Umrichterelektronik, Lagerhaltungskosten und Transportkosten eingespart werden.

Erfindungsgemäß weist der Deckel einen Bereich mit Ausnehmungen auf. Die Ausnehmungen bilden vorzugsweise einen durchbrochenen Bereich. Von Vorteil ist dabei, dass ein Lufteinlass ausgebildet ist, durch den Kühlluft zu einer mit dem Anschlusskasten verbundenen Fläche strömen kann.

Erfindungsgemäß umfasst der Deckel eine Grundplatte, auf der ein Luftleitring befestigt ist, wobei der Ansatzbereich des Luftleitrings auf der Grundplatte den durchbrochenen Bereich begrenzt. Der Ansatzbereich des Luftleitrings umfasst den Ansatzkreis, an dem der Luftleitring in die Grundplatte übergeht. Von Vorteil ist dabei, dass ein möglichst großer axialer Abschnitt eines Motors durch die rohrförmig ausgebildete Seitenwand der Lüfterhaube für die Kühlung nutzbar ist, denn der Deckel weist nur eine geringe axiale Dicke auf. Von Vorteil ist weiterhin, dass die Lüfterhaube aus einem stabilen rohrförmigen Teil aus Metall und einem kostengünstigen Deckel aus Kunststoff fertigbar ist. Durch den Luftleitring wird die Kühlluft besser geführt. Die einstückige Ausführung von Luftleitring und Grundplatte verringert die Montagekosten. Es sind weiter unterschiedliche Lüfterräder mit unterschiedlichen Flügelformen im Lüfter einsetzbar, wobei jeweils ein passender Deckel mit der Flügelform angepasstem Luftleitring auf das rohrförmige Teil gesetzt wird.

Bei einer vorteilhaften Ausgestaltung ist der minimale Durchmesser der Grundplatte größer als der maximale Durchmesser des Luftleitrings. Somit ist der Luftleitring in das Innere des ersten rohrförmigen Teils einsetzbar. Er ist daher geschützt, und die axiale Baulänge des Umrichtermotors ist vermindert.

Bei einer vorteilhaften Ausgestaltung erstreckt sich der Anschlusskasten über die axiale Länge des rohrförmigen Teils. Von Vorteil ist dabei, dass genügend Platz für die Aufnahme einer Umrichterelektronik vorhanden ist und die Umrichterelektronik zur Entwärmung die gesamte Länge des rohrförmigen Teils nutzen kann. Insbesondere ist die direkte thermische Anbindung der Umrichterelektronik über einen großen Bereich an das rohrförmige Teil möglich, wodurch die Entwärmung verbessert ist und wodurch eine Entwärmung mittels Fremdlüfter oder Zusatzkühler entfallen kann. Auch die Fertigung aufwendiger Kühlrippen oder Kühlfinger kann entfallen, weil eine aus Aluminiumguss hergestellte Seitenwand einer Lüfterhaube genügend Oberfläche und Material bereitstellt, um eine ausreichende Entwärmung sicherzustellen.

Bei einer vorteilhaften Ausgestaltung weist das rohrförmige Teil eine im Wesentlichen quadratische Grundform auf, wobei in den abgerundeten Ecken auf der Innenseite des rohrförmigen Teils jeweils eine axial im Wesentlichen über die gesamte Länge des rohrförmigen Teils verlaufende Verstärkungsrippe angeordnet ist. Vorzugsweise weisen die Verstärkungsrippen an dem einen axialen Ende Bohrlöcher oder andere Befestigungsmittel zur Befestigung des Deckels auf. Von Vorteil ist dabei, dass eine stabile, belastbare mechanische Schnittstelle geschaffen ist zur Montage von Motoroptionen als Alternative zum einfachen Deckel. Das rohrförmige Teil ist vorzugsweise aus Aluminiumguss hergestellt.

Bei einer vorteilhaften Ausgestaltung ist an der Innenseite des Anschlusskastenbodens eine plane Auflagefläche ausgebildet zur Entwärmung eines Leistungsbauelements. Die Auflagefläche ist vorzugsweise gefräst oder geschliffen. Somit sind die IGBTs der Umrichterelektronik besonders gut an das rohrförmige Teil thermisch angebunden. Das rohrförmige Teil dient daher der Wärmeaufspreizung von den Leistungsbauelementen an die Umgebung.

Wichtige Merkmale der Erfindung sind, dass der Umrichtermotor eine erfindungsgemäße Lüfterhaube umfasst, deren Anschlusskasten gehäusebildend für die Umrichterelektronik ist. Von Vorteil ist dabei, dass die Umrichterelektronik über einen großflächig ausgebildeten Gehäuseteil entwärmt wird, wobei die inneren Oberflächen dieses Gehäuseteils von der Kühlluft des Lüfters überstrichen werden. Somit ist die Kühlleistung der Elektronikentwärmung erhöht. Insbesondere sind Kühlrippen am Gehäuse der Umrichterelektronik verzichtbar, und es sind glatte, leicht zu reinigende Oberflächen ausbildbar. Von Vorteil ist weiterhin, dass der Deckel aus kostengünstigem Kunststoff fertigbar und unter den Rand des ersten rohrförmigen Teils, also der Seitenwand der Lüfterhaube versenkbar ist. Somit ist die Lüfterhaube zweigeteilt aufbaubar. Es wird ein stabiles Teil, das weitere Umrichtermotorteile, beispielsweise den Anschlusskasten, fest mit dem Stator verbindet, mit einem kostengünstigen, austauschbaren, leichten Teil kombiniert.

Bei einer vorteilhaften Ausgestaltung ist mindestens ein Leistungsbauelement der Endstufe der Umrichterelektronik auf der planen Auflagefläche zur Entwärmung aufgelegt. Von Vorteil ist dabei, dass ein möglichst kurzer Abstand zwischen den Leistungsbauelementen als Wärmequelle und dem Luftstrom vom Lüfter als Wärmesenke bereitgestellt ist.

Bei einer vorteilhaften Ausgestaltung ist das erste rohrförmige Teil der Lüfterhaube gehäusebildend für ein Lüfterrad und eine Haltebremse. Lüfterrad und Haltebremse sind somit vorteilhaft abschließbar durch den aufgesetzten Deckel und damit einer Wartung leicht zugänglich. Vorzugsweise umgibt das erste rohrförmige Teil der Lüfterhaube ein zweites rohrförmiges Teil, das gehäusebildend für den Stator des Umrichtermotors ist. Es ist zwischen erstem rohrförmigen Teil und zweitem rohrförmigen Teil ein im Querschnitt ringförmiger Strömungskanal ausgebildet, der den zweiten rohrförmigen Teil umgibt, wobei Stator und Haltebremse dicht gegen den Strömungskanal abgeschlossen sind. Vorzugsweise umfasst der Strömungskanal den Bereich, der auf der Innenseite des rohrförmigen Teils gegenüber der planen Auflagefläche am Boden des Anschlusskastens liegt. Somit ist der metallische Bereich der Lüfterhaube nutzbar zur Entwärmung des Umrichters. Diese Entwärmung wird verbessert durch die an der Innenseite der Seitenwand der Lüfterhaube vorbeistreichende Luft. Der dichte Abschluss von Stator und Haltebremse verringert Verschmutzungen durch die Kühlluft, und der Wartungsaufwand wird verringert.

Bei einer vorteilhaften Ausgestaltung sind das erste rohrförmige Teil und das zweite rohrförmige Teil aus einem Gussteil gefertigt, wobei radial verlaufende Stege das erste rohrförmige Teil mit dem zweiten rohrförmigen Teil verbinden. Somit ist das gesamte Gehäuse aus Statorgehäuse und Lüfterhauben-Seitenwand und Anschlusskastenansatz aus einem Gussteil fertigbar. Montagekosten für den Zusammenbau von Einzelteilen entfallen somit weitestgehend. Durch die einstückige Ausbildung des Gehäuses aus Gussteilen ist somit eine große Kühlfläche ohne ungünstige Wärmeübergänge ausgebildet. Obwohl Statorgehäuse und Elektronikgehäuse miteinander verbunden sind, sind sie durch die Ausbildung gekühlter Verbindungsstege thermisch entkoppelt. Auch hierdurch ist ein verminderter Kühlleistungsbedarf erreicht.

Bei einer vorteilhaften Ausgestaltung laufen die Verstärkungsrippen auf der Innenseite des ersten rohrförmigen Teils am dem einen axialen Ende gegenüberliegenden anderen axialen Ende in radial verlaufende Stege aus, wobei diese Stege das erste rohrförmige Teil mit dem zweiten rohrförmigen Teil verbinden und Bohrungen für Befestigungsschrauben für die am zweiten rohrförmigen Teils angeordneten Lagerschilde des Motors des Umrichters aufweisen. Somit ist eine Oberflächenform bereitgestellt, die mit wenigen Arbeitsschritten fertigbar ist. Verlorene Formen beim Gießen sind vermieden.

Bei einer vorteilhaften Ausgestaltung ist der Innenraum des Anschlusskastens mit dem Innenraum des zweiten rohrförmigen Teils durch einen Anschlusskanal zur Durchführung der Statoranschlusskabel verbunden, wobei der Anschlusskanal dicht abgeschlossen ist gegen den Strömungskanal. Der Anschlusskanal ist vorzugsweise beim Gießen ausgebildet. Der dichte Abschluss des Anschlusskanals verhindert beispielsweise eine Beschädigung des Stators durch eindringende Feuchtigkeit.

Bei einer vorteilhaften Ausgestaltung ist eine Haltebremse mit einem Handlüfthebel vorgesehen, wobei der Handlüfthebel durch eine Öffnung im ersten rohrförmigen Teil geführt ist. Somit ist der Umrichtermotor auch im unbestromten Zustand bewegbar, beispielsweise bei einer Wartung der Maschine oder Anlage, die durch den Umrichtermotor angetrieben werden soll. Eine Kupplung ist somit verzichtbar.

Weitere Vorteile ergeben sich aus den Unteransprüchen.

Die Erfindung wird nun anhand von Abbildungen näher erläutert:
Es zeigt
   - Figur 1 einen Umrichtermotor mit Motoranschlusskasten,
   - Figur 2 eine Schnittansicht des Umrichtermotors aus Figur 1,
   - Figur 3 eine weitere Schnittansicht des Umrichtermotors aus Figur 1,
   - Figur 4 eine Ansicht des Umrichtermotors aus Figur 1 von hinten und
   - Figur 5 eine erfindungsgemäße Lüfterabdeckung.

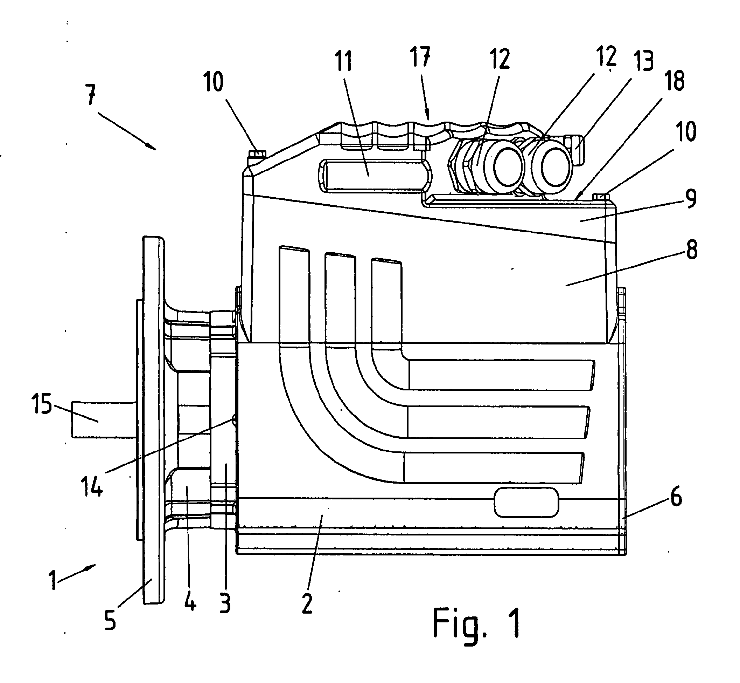

Figur 1 zeigt einen Umrichtermotor 1 in Seitenansicht. Ein rohrförmiges Außengehäuse 2 umgibt koaxial ein rohrförmiges Innengehäuse 3. Das Innengehäuse 3 enthält die Motoreinheit des Umrichtermotors 1. Der Stator der Motoreinheit ist in dem Innengehäuse 3 angeordnet und wird durch dieses kraftschlüssig gehalten. Das Innengehäuse 3 ist auf der Antriebsseite der Motoreinheit durch einen A-Lageschild 4 abgeschlossen, der in einen Getriebeflansch 5 übergeht. Die Antriebsseite der Motorwelle 15 ragt durch den Getriebeflansch 5 hindurch zur Verbindung mit der eintreibenden Welle eines Getriebes. Am gegenüberliegenden Ende des Umrichtermotors 1 ist das Außengehäuse 2 mit einer als Deckel aufgesetzten Lüfterabdeckung 6 gitterartig verschlossen.

Das Innengehäuse 3 ist über Stege 14 mit dem Außengehäuse 2 fest verbunden. Innengehäuse 3 und Außengehäuse 2 sind aus einem gemeinsamen Gussteil gefertigt. Vorzugsweise wird als Material Aluminium gewählt.

Auf der Oberseite des Außengehäuses 2 ist ein Anschlusskasten 7 angeordnet. Der Anschlusskasten 7 umfasst ein als Anschlusskastendeckel 9 ausgebildetes Oberteil, das auf ein Unterteil aufgesetzt wird, wobei das Unterteil aus einem Anschlusskastenansatz 8 und einem Bereich des Außengehäuses 2 gebildet wird. Der Anschlusskastenansatz 8 ist einstückig mit dem Außengehäuse 2 ausgeführt und umgibt einen Bereich des Außengehäuses 2, der den Boden des Anschlusskastens 7 bildet. Der Anschlusskastenansatz 8 erstreckt sich im Wesentlich über die gesamte axiale Länge des Außengehäuses 2.

Der Anschlusskastendeckel 9 wird durch Schrauben 10 auf dem Anschlusskastenansatz befestigt.

Der Anschlusskastenansatz 8 weist eine schräg verlaufende Oberkante auf, deren Höhe über dem Außengehäuse 2 auf der Antriebsseite höher ist als am gegenüberliegenden Ende des Umrichtermotors 1. Somit ist eine Schrägung mit einem abfallender Höhenverlauf ausgebildet, der entlang der Motorachse von der Antriebsseite weg abnimmt. Der Anschlusskastendeckel 9 weist eine entsprechende Schrägung auf. Insbesondere sind die Winkel der Schrägung mit den Seitenwänden bei Unterteil und Oberteil gleich, so dass die Seitenwände im Wesentlichen eben ineinander über gehen.

Im oberen Bereich des Anschlusskastendeckels 9 ist eine Stufe ausgebildet, die durch die Deckeloberseite 17 und einen Absatz 18 sowie eine beide Flächen verbindende Seitenfläche gebildet wird. Deckeloberseite 17 und Absatz 18 definieren somit jeweils ein Plateau unterschiedlicher Höhe, wobei der Absatz 18 gegenüber der Deckeloberseite 17 abgestuft ist. Durch die Stufe wird ein Höhenverlauf gebildet, der in der gleichen Richtung wie die Schrägung am Anschlusskastenansatz 8 abfallend verläuft. Die Stufe umfasst eine Seitenfläche, auf der Anschlussstutzen 12, 13 für eine dichtende Kabeldurchführung angeordnet sind.

An gegenüberliegenden Seiten des Anschlusskastendeckels 9 ist jeweils eine axial verlaufende Griffmulde 11 ausgebildet, mit denen der Anschlusskastendeckel 9 abnehmbar ist. An der Vorderseite des Anschlusskastendeckels 9 ist weiterhin eine flächige Abschrägung 21 ausgebildet, die in die Deckeloberseite 17 über geht.

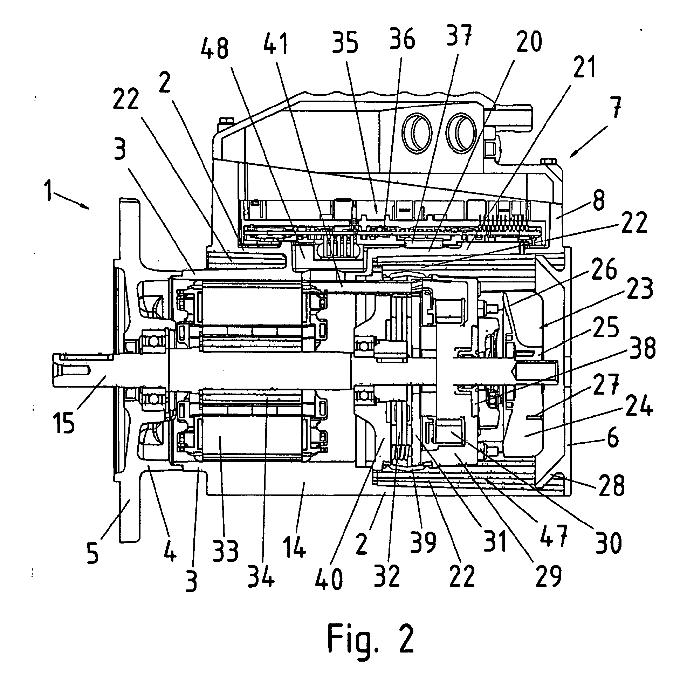

Figur 2 zeigt eine Schnittansicht des Umrichtermotors aus Figur 1. Auf der Motorwelle 15 ist der Rotor 34 der Motoreinheit des Umrichtermotors 1 angebracht. Der Rotor 34 ist im Stator 33 der Motoreinheit angeordnet. Der Stator 33 ist in ein rohrförmig ausgebildetes Statorgehäuse 3 eingeschoben und in diesem befestigt. Das Statorgehäuse 3 ist durch den A-Lagerschild 4 und den B-Lagerschild 40 verschlossen, durch die die Motorwelle 15 geführt ist. Am A-Lagerschild 4 ist ein Getriebeflansch 5 ausgebildet zum Anschluss des Umrichtermotors 1 an eine anzutreibende Vorrichtung. Dieses Ende der Motoreinheit ist somit als Antriebseite ausgebildet. Am rückwärtigen, durch den B-Lagerschild geführten Ende der Motorwelle 15 sind eine Haltebremse 47 und ein Lüfterrad 23 angeordnet. Die Haltebremse 47 umfasst einen Bremskörper 29, eine Bremsscheibe 32, eine Ankerscheibe 31 und Spulen 30, mit denen die Ankerscheibe 31 gelüftet wird zur Freigabe der Haltebremse 47.

Die Haltebremse 47, insbesondere der die Bremsscheibe 32 umgebende Bereich, sind durch eine umlaufende Bremsendichtung 39 abgedichtet. Die Bremsendichtung 39 weist eine mittig umlaufende Falte auf und ist somit in axialer Richtung längenveränderlich. Die Haltebremse 47 ist auf der Motorwelle 15 durch eine Wellendichtung 38 mit einem oder mehreren Wellendichtringen abgedichtet. Die Bremsenanschlusskabel 41 sind innerhalb des abgedichteten Bereichs durch den B-Lagerschild geführt.

Das Lüfterrad 23 weist eine Nabe 25 zur Befestigung auf der Motorwelle 15 auf. Das Lüfterrad weist weiter einen konisch verlaufenden Grundkörper 26 auf, an dem Flügel 24 ausgebildet sind. In mindestens einem Flügel 24 ist ein axial verlaufendes Befestigungsloch ausgebildet zur Befestigung einer nicht dargestellten Geberfahne.

Das Statorgehäuse 3 wird von einem rohrförmig ausgebildeten Außengehäuse 2 umgeben. Das Außengehäuse 2 ist teilweise gehäusebildend für das Lüfterrad 23 und Haltebremse 47. Das Außengehäuse 2 ist an einem axialen Ende durch eine als Deckel ausgebildete Lüfterabdeckung 6 verschlossen. Die Lüfterabdeckung 6 bildet somit gemeinsam mit dem Außengehäuse 2 die Lüfterhaube des Umrichtermotors.

An der Lüfterabdeckung 6 ist auf der Innenseite ein Leitring 28 für die durch den Lüfter bewegte Luft ausgebildet. Der Leitring ist rotationssymmetrisch ausgeformt und öffnet sich konisch zum Inneren des Umrichtermotors hin. Der Öffnungswinkel des Leitrings ist so eingerichtet, dass jeweils zwei Lüfterflügel 24 gemeinsam mit dem Grundkörper 26 des Lüfterrads 23 einen sich im Axialschnitt verengenden Luftkanal bilden. Somit sind düsenartige Kanäle geformt, die bei einer Rotation des Lüfterrads 23 Kühlluft in einen zwischen dem ersten rohrförmigen Teil, dem Außengehäuse 2, und dem zweiten rohrförmigen Teil, dem Statorgehäuse 3, gebildeten Strömungskanal 22 bewegen. Der Strömungskanal 22 weist einen ringförmigen Querschnitt auf und erstreckt sich über die gesamte axiale Länge des Statorgehäuses 3. Somit wird zum einen der Stator 33 und zum anderen die Innenseite des Außengehäuses 2 gekühlt und zum dritten eine Wärmesperre zwischen Stator 33 und Anschlusskasten 7 eingerichtet.

Durch die beschriebenen Dichtungsmaßnahmen sind das Innere des Stators 33 und das Innere der Haltebremse 47 gegen den Kühlluftstrom abgedichtet und vor Verschmutzung geschützt. Ein nach außen abgeschlossener Anschlusskanal 48 verbindet das Innere des Anschlusskastens 7 mit dem Inneren des Statorgehäuses 3 zur Durchführung der Anschlusskabel für den Stator und der Bremsenanschlusskabel 41.

Das Statorgehäuse 3 ist mit dem Außengehäuse 2 über radial verlaufende Stege 14 verbunden, die den Strömungskanal 22 durchbrechen. Statorgehäuse 3, Stege 14 und Außengehäuse 2 sind aus einem Aluminiumgussteil gefertigt. Die Stege 14 weisen daher eine in eine axiale Richtung abnehmende Dicke auf, um die beim Guss eingesetzte Innenform entfernen zu können.

Der Anschlusskasten 7 weist einen Anschlusskastenansatz 8 und einen Anschlusskastendeckel 9 auf. Der Anschlusskastenansatz 8 ist am Außengehäuse 2 und mit diesem einstückig ausgebildet. Der Anschlusskasten 7 ist gehäusebildend für die Umrichterelektronik 35 des Umrichtermotors 1. Die Umrichterelektronik 35 umfasst auf einer Leiterplatte 36 zumindest die Leistungsendstufe mit Leistungsbauelementen 37 in Form von IGBTs. Zusätzlich ist auf einer weiteren, nicht dargestellten Leiterplatte die Umrichterelektronik 35 mit einer Gleichrichterstufe und einem Zwischenkreiskondensator ausgerüstet.

Auf der Innenseite des Anschlusskastenbodens sind in einem ersten Entwärmungsbereich 20 und in einem zweiten Entwärmungsbereich 21 jeweils plane Auflageflächen ausgebildet zur Entwärmung von Schaltungsteilen der Umrichterelektronik 35. Die Auflageflächen sind feiner bearbeitet als der restliche Gusskörper und weist eine deutlich geringerer Oberflächenrauhigkeit auf, die eine gute thermische Anbindung ermöglicht. Auf die Auflagefläche des ersten Entwärmungsbereichs 20 sind die Leistungsbauelemente 37 in einer Reihe flächig aufgelegt, wobei zwischen Leistungsbauelementen 37 und Auflagefläche Wärmeleitpaste aufgetragen ist. Die Umrichterelektronik 35 ist teilweise mit einer wärmeleitenden Vergussmasse ausgegossen, über die weitere elektronische Bauelemente der Umrichterelektronik thermisch an das Außengehäuse 2 angebunden sind.

Die Kühlung der Innenfläche des Außengehäuses durch die Kühlluft im Strömungskanal 22 bewirkt somit eine verbesserte Entwärmung der Umrichterelektronik 35 über die Entwärmungsbereiche 20, 21, besonders der Leistungsbauelemente 37. Das Außengehäuse 2 stellt somit eine große rohrförmige Kühlfläche bereit, die von der Kühlluft überstrichen wird. Zusätzliche Kühlrippen sind somit verzichtbar.

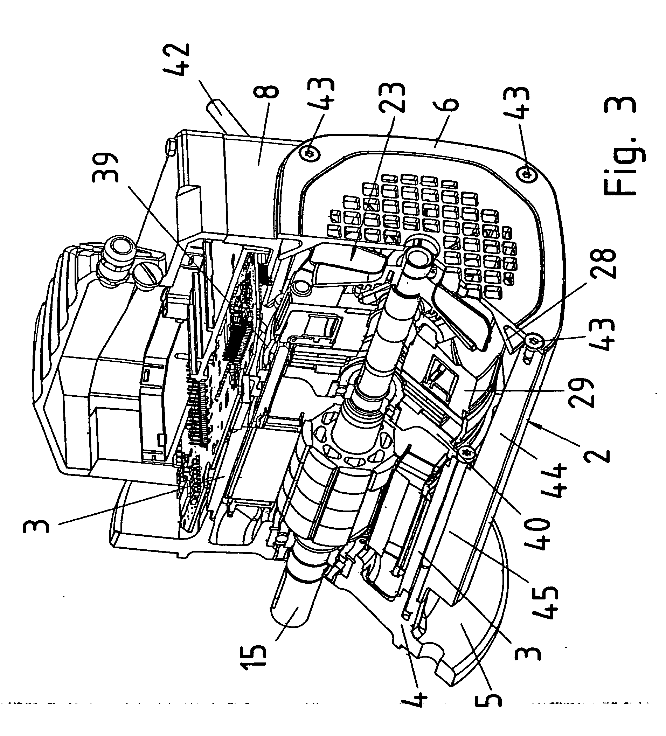

Figur 3 zeigt eine weitere Ansicht des Umrichtermotors aus Figur 1. Das Statorgehäuse 3 ist mit dem Außengehäuse 2 über einen radial verlaufenden Steg 45 verbunden, in dem eine Bohrung für ein Verbindungsschraube zwischen A-Lagerschild 4 und B-Lagerschild 40 angeordnet ist. Der Steg 45 läuft in axialer Richtung in eine Verstärkungsrippe 44 aus, die den Bereich des Außengehäuses 2, der Bremskörper 29 und Lüfterrad 23 umgibt, verstärkt. Am Ende der Verstärkungsrippe 44 ist eine Bohrung vorgesehen zur Aufnahme einer Schraube 43, mit der die Lüfterabdeckung 6 am Außengehäuse 2 befestigt ist.

Der Steg 45 und die Verstärkungsgrippe 44 weisen eine zum Lüfterende hin abnehmende Dicke auf. Die Verstärkungsrippe 44 ist zudem mit einer in dieser Richtung abnehmenden radialen Höhe ausgebildet. Die Innenfläche des Außengehäuses 2 mit den Stegen 14, 45 und Verstärkungsrippen 44 öffnet sich somit leicht konisch zum Lüfterende hin. Somit ist ein in der Gussfertigung verwendeter Gusskörper nach dem Guss entfernbar.

Entsprechende Stege 45 mit Verstärkungsrippen 44 und Schrauben 43 sind in den übrigen abgerundeten Eckbereichen des Außengehäuses 2 angeordnet.

Zum Lüften der Haltebremse 47 ist ein Handlüfthebel 42 vorgesehen.

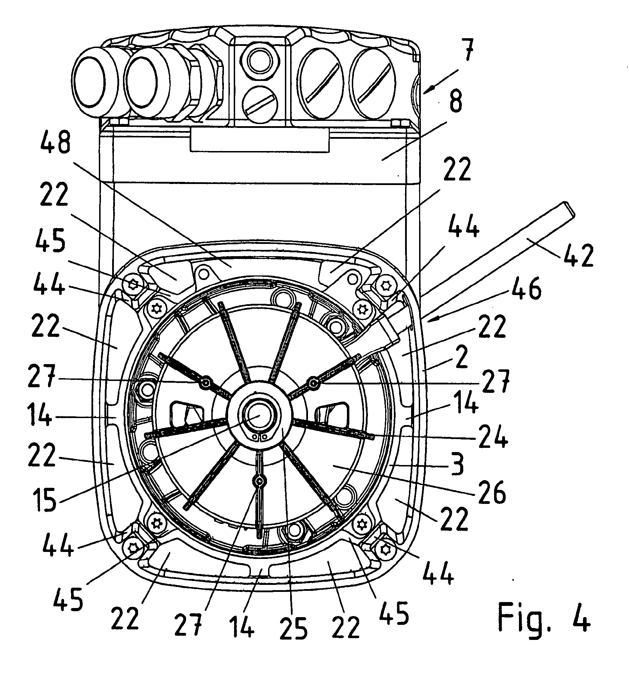

Figur 4 zeigt die rückwärtige Ansicht des Umrichtermotors aus Figur 1 mit abgenommener Lüfterabdeckung. Das Außengehäuse 2 weist einen quadratischen Querschnitt mit abgerundeten Ecken auf. In jeder Ecke ist ein Steg 45 mit einer Verstärkungsrippe 44 angeordnet. Zwischen den Verstärkungsrippen 44 in der Mitte der Kantenlinie des quadratischen Querschnitts ist auf drei Seiten ein Steg 14 zur Verbindung des Statorgehäuses 3 mit dem Außengehäuse 2 angeordnet. Die Stege 14 sind dünner ausgebildet als die Stege 45 und nehmen keine Bohrung für Befestigungsschrauben der Lagerschilde auf. Die Stege 14 erstrecken sich lediglich über die axiale Länge des Statorgehäuses 3.

Die dickeren Stege 45 überbrücken einen größeren Abstand zwischen den rohrförmigen Gehäuseteilen als die dünneren Steg 14. Die Stege 14, 45 durchbrechen den Strömungskanal 22 und bilden somit ein regelmäßiges Muster von einzelnen, axial verlaufenden Durchlässen für Kühlluft. An der Oberseite des runden Statorgehäuses 3 ist ein nach außen abgeschlossener Anschlusskanal 48 ausgeformt, der das Innere des Anschlusskastens 7 mit dem Inneren des Statorgehäuses 3 verbindet zur Durchführung der Anschlusskabel für den Stator und der Bremsenanschlusskabel.

Auf dem Grundkörper 26 des Lüfterrads sind neun Flügel 24 angeordnet. Die Flügel 24 verlaufen jeweils in einer Axialebene. Somit ist eine drehrichtungsunabhängige Funktion des Lüfters sichergestellt. In drei im Winkel von 120° zueinander angeordneten Flügeln 24 sind Befestigungslöcher 27 eingebracht zur konzentrischen Befestigung einer ringförmigen Scheibe mit magnetisierten Bereichen, deren Magnetisierung entlang des Umfangs wechselt. Somit ist statt der Lüfterabdeckung ein Geber montierbar, der diese bei Rotation der Motorwelle 15 wechselnde Magnetisierung erfasst und daraus die Drehzahl und/oder den Drehwinkel erfasst. Verschiedene Scheiben sind montierbar, die eine unterschiedliche Winkelauflösung und/oder eine Drehwinkelerfassung ermöglichen.

Die Stirnenden der Verstärkungsrippen 44 und der Rand des Außengehäuses 2 formen eine mechanische Schnittstelle aus, auf der alternativ zu der Lüfterabdeckung 6 verschiedene Anbauoptionen montierbar sind. Beispiele solcher Anbauoptionen umfassen den beschriebenen Geber, der in eine Lüfterabdeckung integriert ist, eine als Adapter für den Anbau eines handelsüblichen Gebers ausgebildete Lüfterabdeckung mit einem konzentrischen Geberflansch, einen Fremdlüfter und ein Lüfterdach, also eine dichte Abdeckung gegen Tropfwasser bei Montage des Umrichtermotors mit vertikal verlaufender Motorwelle 15. Somit ist eine Baureihe von Umrichtermotoren bereitgestellt, bei der in Varianten je nach Anforderungen unterschiedliche Anbauoptionen an einem einheitlichen Umrichtermotorgehäuse aus Außengehäuse, Statorgehäuse und Anschlusskasten montiert werden.

Die Haltebremse wird mit einem Handlüfthebel 42 belüftet, der durch eine radial orientierte Öffnung 46 im Außengehäuse 2 geführt ist.

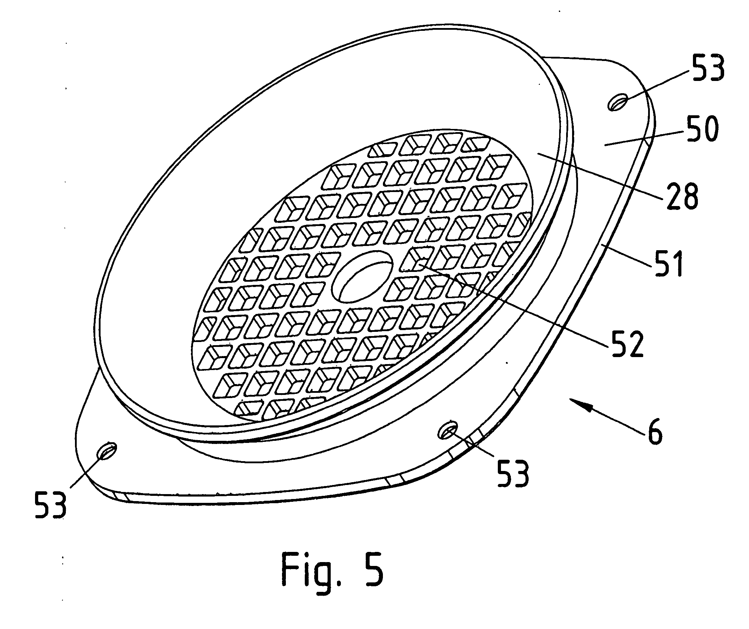

Figur 5 zeigt die Lüfterabdeckung 6 des Umrichtermotors aus Figur 1. Eine Grundplatte 50 ist mit einem Rand 51 versehen, der ein Quadrat mit abgerundeten Ecken und leicht nach außen gebogenen Kanten beschreibt. Die Form der Grundplatte ist so gewählt, dass die Lüfterabdeckung 6 auf den Rand des Außengehäuses 2 in Figur 4 passt. Die Grundplatte ist eben ausgeführt, wodurch ein gerader Abschluss des Außengehäuses 2 des Umrichtermotors erreicht wird. Die Schauben 43 in Figur 3 und 4 werden durch Befestigungslöcher 53 geführt und in die Bohrlöcher der Verstärkungsrippen 44 eingeschraubt.

Auf der Grundplatte 50 ist ein Leitring 28 angebracht, der sich konisch von der Grundplatte 50 weg öffnet. Der Leitring 28 ist mit der Grundplatte 50 einstückig ausgebildet und begrenzt einen durch durchbrochenen Bereich, der als Lufteinlass des Lüfters vorgesehen ist. Vorzugsweise ist die Lüfterabdeckung 6 aus Kunststoff gefertigt.

Der Leitring 28 weist an seinem im Bild oberen Ende einen maximalen Durchmesser auf, der geringer ist als der minimale Durchmesser des Randes 51. Somit ist sichergestellt, dass der Leitring 28 in das Außengehäuse 2 einsetzbar ist und die Grundplatte 50 das Außengehäuses 2 verschließt.

Bei einer Weiterbildung enden die Verstärkungsrippen 44 kurz vor dem Rand des Außengehäuses 2 und es ist eine umlaufende Aufnahme für die Lüfterabdeckung 6 auf der Innenseite des Außengehäuses 2 ausgebildet, so dass die Lüfterabdeckung 6 ganz im Außengehäuse 2 versenkbar ist.

### Bezugszeichenliste

- 1: Umrichtermotor
- 2: Außengehäuse
- 3: Statorgehäuse
- 4: A-Lagerschild
- 5: Getriebeflansch
- 6: Lüfterabdeckung
- 7: Anschlusskasten
- 8: Anschlusskastenansatz
- 9: Anschlusskastendeckel
- 10: Schraube
- 11: Griffmulde
- 12: Anschlussstutzen
- 13: Anschlussstutzen
- 14: Steg
- 15: Motorwelle
- 17: Deckeloberseite
- 18: Absatz
- 20: Entwärmungsbereich
- 21: Entwärmungsbereich
- 22: Luftkanal
- 23: Lüfterrad
- 24: Flügel
- 25: Nabe
- 26: Grundkörper
- 27: Befestigungsloch
- 28: Leitring
- 29: Bremsenkörper
- 30: Spule
- 31: Ankerscheibe
- 32: Bremsscheibe
- 33: Stator
- 34: Rotor
- 35: Umrichterelektronik
- 36: Leiterplatte
- 37: Leistungsbauelement
- 38: Wellendichtung
- 39: Bremsendichtung
- 40: B-Lagerschild
- 41: Bremsenanschlusskabel
- 42: Handlüfthebel
- 43: Schraube
- 44: Verstärkungsrippe
- 45: Steg
- 46: Öffnung
- 47: Haltebremse
- 48: Anschlusskanal
- 50: Grundplatte
- 51: Rand
- 52: Lufteinlass
- 53: Befestigungsloch

## Patentansprüche

1. Mehrteilige Lüfterhaube, umfassend ein rohrförmiges Teil als Seitenwand und einen Deckel,
wobei das erste rohrförmige Teil an einem axialen Ende durch den Deckel verschlossen ist und am ersten rohrförmigen Teil ein in die Lüfterhaube integrierter Anschlusskasten ausgebildet ist,
wobei der Deckel einen durchbrochenen Bereich aufweist,
**dadurch gekennzeichnet, dass**
der Deckel eine Grundplatte (50) umfasst,
auf der ein Luftleitring (28) befestigt ist,
wobei ein Ansatzbereich des Luftleitrings (28) auf der Grundplatte (50) den durchbrochenen Bereich begrenzt.

2. Lüfterhaube nach Anspruch 1,
**dadurch gekennzeichnet, dass**
der minimale Durchmesser der Grundplatte (50) größer ist als der maximale Durchmesser des Luftleitrings (28).

3. Lüfterhaube nach mindestens einem der vorangegangenen Ansprüche,
**dadurch gekennzeichnet, dass**
sich der Anschlusskasten über die axiale Länge des rohrförmigen Teils erstreckt.

4. Lüfterhaube nach mindestens einem der vorangegangenen Ansprüche,
**dadurch gekennzeichnet, dass**
das rohrförmige Teil eine im Wesentlichen quadratische Grundform aufweist,
wobei in den Ecken auf der Innenseite des rohrförmigen Teils jeweils eine axial im Wesentlichen über die gesamte Länge des rohrförmigen Teils verlaufende Verstärkungsrippe (44) angeordnet ist,
insbesondere wobei die Verstärkungsrippen (44) an dem einen axialen Ende Bohrlöcher zur Befestigung des Deckels aufweisen.

5. Lüfterhaube nach mindestens einem der vorangegangenen Ansprüche,
**dadurch gekennzeichnet, dass**
zur Entwärmung eines Leistungsbauelements (37) an der Innenseite des Anschlusskastenbodens eine plane Auflagefläche ausgebildet ist.

6. Lüfterhaube nach mindestens einem der vorangegangenen Ansprüche,
**dadurch gekennzeichnet, dass**
das erste rohrförmige Teil aus Aluminiumguss
und der Deckel aus Kunststoffspritzguss hergestellt sind.

7. Umrichtermotor (1), umfassend eine Lüfterhaube nach mindestens einem der vorangegangenen Ansprüche,
**dadurch gekennzeichnet, dass**
der Anschlusskasten der Lüfterhaube gehäusebildend für die Umrichterelektronik (35) ist.

8. Umrichtermotor (1) nach Anspruch 7,
**dadurch gekennzeichnet, dass**
mindestens ein Leistungsbauelement (37) der Endstufe der Umrichterelektronik (35) auf der planen Auflagefläche zur Entwärmung aufgelegt ist.

9. Umrichtermotor (1) nach Anspruch 7 oder 8,
**dadurch gekennzeichnet, dass**
das erste rohrförmige Teil der Lüfterhaube gehäusebildend für ein Lüfterrad (23) und eine Haltebremse (47) ist.

10. Umrichtermotor (1) nach einem der Ansprüche 7 bis 9,
**dadurch gekennzeichnet, dass**
das erste rohrförmige Teil der Lüfterhaube ein zweites rohrförmiges Teil umgibt,
das gehäusebildend für den Stator (33) des Umrichtermotors (1) ist,
insbesondere wobei zwischen erstem rohrförmigen Teil und zweitem rohrförmigen Teil ein im Querschnitt ringförmiger Strömungskanal ausgebildet ist,
der den zweiten rohrförmigen Teil umgibt,
wobei Stator (33) und Haltebremse (47) dicht gegen den Strömungskanal abgeschlossen sind,
insbesondere wobei der Strömungskanal den Bereich umfasst, der auf der Innenseite des rohrförmigen Teils gegenüber der planen Auflagefläche am Boden des Anschlusskastens liegt.

11. Umrichtermotor (1) nach einem der Ansprüche 7 bis 10,
**dadurch gekennzeichnet, dass**
das erste rohrförmige Teil und das zweite rohrförmige Teil aus einem Gussteil gefertigt sind, wobei radial verlaufende Stege (14) das erste rohrförmige Teil mit dem zweiten rohrförmigen Teil verbinden,
insbesondere wobei die Verstärkungsrippen (44) auf der Innenseite des ersten rohrförmigen Teils am dem einen axialen Ende gegenüberliegenden anderen axialen Ende in radial verlaufende Stege (14) auslaufen, wobei diese Stege (14) das erste rohrförmige Teil mit dem zweiten rohrförmigen Teil verbinden
und Bohrungen für Befestigungsschrauben für die am zweiten rohrförmigen Teils angeordneten Lagerschilde des Motors des Umrichters aufweisen.

12. Umrichtermotor (1) nach einem der Ansprüche 7 bis 11,
**dadurch gekennzeichnet, dass**
der Innenraum des Anschlusskastens mit dem Innenraum des zweiten rohrförmigen Teils durch einen Anschlusskanal zur Durchführung der Statoranschlusskabel verbunden ist, wobei der Anschlusskanal (48) gegen den Strömungskanal dicht abgeschlossen ist,
und/oder dass
eine Haltebremse (47) mit einem Handlüfthebel vorgesehen ist,
wobei der Handlüfthebel (42) durch eine Öffnung (46) im ersten rohrförmigen Teil geführt ist.

## Claims

1. Multipart fan shroud, comprising a tubular part as side wall and a cover,
wherein the first tubular part is closed at one axial end by the cover and a connecting box integrated into the fan shroud is formed on the first tubular part,
wherein the cover has a perforated region,
**characterised in that**
the cover comprises a base plate (50),
to which an air guide ring (28) is fastened,
wherein an attachment region of the air guide ring (28) on the base plate (50) delimits the perforated region.

2. Fan shroud according to Claim 1,
**characterised in that**
the minimum diameter of the base plate (50) is greater than the maximum diameter of the air guide ring (28).

3. Fan shroud according to at least one of the preceding claims,
**characterised in that**
the connecting box extends over the axial length of the tubular part.

4. Fan shroud according to at least one of the preceding claims,
**characterised in that**
the tubular part has a substantially square basic shape, wherein, in the corners on the inner side of the tubular part, there is arranged in each case a reinforcing rib (44) running axially substantially over the entire length of the tubular part,
in particular wherein the reinforcing ribs (44) have at the one axial end bore holes for fastening the cover.

5. Fan shroud according to at least one of the preceding claims,
**characterised in that**
a plane bearing surface is formed on the inner side of the bottom of the connecting box for heat dissipation of a power component (37).

6. Fan shroud according to at least one of the preceding claims,
**characterised in that**
the first tubular part is made of cast aluminium and the cover is made of injection-moulded plastic.

7. Converter motor (1), comprising a fan shroud according to at least one of the preceding claims,
**characterised in that**
the connecting box of the fan shroud forms the housing for the converter electronics (35).

8. Converter motor (1) according to Claim 7,
**characterised in that**
at least one power component (37) of the output stage of the converter electronics (35) is placed on the plane bearing surface for heat dissipation.

9. Converter motor (1) according to Claim 7 or 8,
**characterised in that**
the first tubular part of the fan shroud forms the housing for a fan wheel (23) and a holding brake (47).

10. Converter motor (1) according to one of Claims 7 to 9, **characterised in that**
the first tubular part of the fan shroud surrounds a second tubular part
which forms the housing for the stator (33) of the converter motor (1),
in particular wherein a flow channel of annular cross-section is formed between the first tubular part and the second tubular part
which surrounds the second tubular part,
wherein stator (33) and holding brake (47) are sealed off tightly from the flow channel,
in particular wherein the flow channel comprises the region which lies on the inner side of the tubular part opposite the plane bearing surface at the bottom of the connecting box.

11. Converter motor (1) according to one of Claims 7 to 10, **characterised in that**
the first tubular part and the second tubular part are produced from one casting,
wherein radially running webs (14) connect the first tubular part to the second tubular part,
in particular wherein the reinforcing ribs (44) on the inner side of the first tubular part, at the other axial end opposite the one axial end, merge into radially running webs (14), wherein these webs (14) connect the first tubular part to the second tubular part
and have bores for fastening screws for the end plates, arranged on the second tubular part, of the motor of the converter.

12. Converter motor (1) according to one of Claims 7 to 11, **characterised in that**
the inner space of the connecting box is connected to the inner space of the second tubular part by a connecting channel for leading through the stator connecting cable,
wherein the connecting channel (48) is sealed off tightly from the flow channel,
and/or **in that**
a holding brake (47) is provided with a manual release lever, wherein the manual release lever (42) is led through an opening (46) in the first tubular part.

## Revendications

1. Capot de ventilateur en plusieurs parties, comprenant un couvercle et une partie tubulaire constituant une paroi latérale,
la première partie tubulaire étant obturée par ledit couvercle à une extrémité axiale et une boîte de raccordement, intégrée dans ledit capot de ventilateur, étant ménagée sur ladite première partie tubulaire,
ledit couvercle présentant une région perforée,
**caractérisé par le fait que**
le couvercle comporte une plaque de base (50)
sur laquelle est fixée une bague (28) de guidage d'air,
sachant qu'une zone d'engagement de ladite bague (28) de guidage d'air, sur ladite plaque de base (50), délimite la région perforée.

2. Capot de ventilateur selon la revendication 1,
**caractérisé par le fait que**
le diamètre minimal de la plaque de base (50) est plus grand que le diamètre maximal de la bague (28) de guidage d'air.

3. Capot de ventilateur selon au moins l'une des revendications précédentes,
**caractérisé par le fait que**
la boîte de raccordement s'étend sur la longueur axiale de la partie tubulaire.

4. Capot de ventilateur selon au moins l'une des revendications précédentes,
**caractérisé par le fait que**
la partie tubulaire présente une configuration de base essentiellement carrée,
une nervure respective de renforcement (44), s'étendant pour l'essentiel sur toute la longueur de ladite partie tubulaire dans le sens axial, étant disposée dans les coins sur la face intérieure de ladite partie tubulaire,
sachant notamment que les nervures de renforcement (44) sont pourvues, à l'une des extrémités axiales, de perçages dévolus à la fixation du couvercle.

5. Capot de ventilateur selon au moins l'une des revendications précédentes,
**caractérisé par le fait**
**qu'**une surface plane de contact est ménagée à la face intérieure du fond de la boîte de raccordement, en vue de dissiper la chaleur d'un élément structurel de puissance (37).

6. Capot de ventilateur selon au moins l'une des revendications précédentes,
**caractérisé par le fait que**
la première partie tubulaire est fabriquée en fonte d'aluminium
et le couvercle est fabriqué en matière plastique moulée par injection.

7. Moteur (1) de convertisseur, incluant un capot de ventilateur conforme à au moins l'une des revendications précédentes,
**caractérisé par le fait que**
la boîte de raccordement du capot de ventilateur matérialise un boîtier dédié à l'unité électronique (35) dudit convertisseur.

8. Moteur (1) de convertisseur, selon la revendication 7,
**caractérisé par le fait**
**qu'**au moins un élément structurel de puissance (37) de l'étage final de l'unité électronique (35) dudit convertisseur est mis en place sur la surface plane de contact pour la dissipation de chaleur.

9. Moteur (1) de convertisseur, selon la revendication 7 ou 8,
**caractérisé par le fait que**
la première partie tubulaire du capot de ventilateur matérialise un boîtier dédié à une roue (23) de ventilateur, et à un frein de maintien (47).

10. Moteur (1) de convertisseur, selon l'une des revendications 7 à 9,
**caractérisé par le fait que**
la première partie tubulaire du capot de ventilateur entoure une seconde partie tubulaire matérialisant un boîtier dédié au stator (33) dudit moteur (1) de convertisseur,
sachant notamment qu'un canal d'écoulement de section transversale annulaire,
entourant ladite seconde partie tubulaire,
est ménagé entre ladite première partie tubulaire et ladite seconde partie tubulaire,
ledit stator (33) et le frein de maintien (47) étant isolés hermétiquement vis-à-vis dudit canal d'écoulement,
sachant notamment que ledit canal d'écoulement inclut la région qui se trouve, à la face intérieure de la partie tubulaire, en regard de la surface plane de contact située au fond de la boîte de raccordement.

11. Moteur (1) de convertisseur, selon l'une des revendications 7 à 10,
**caractérisé par le fait que**
la première partie tubulaire et la seconde partie tubulaire sont réalisées sous la forme d'une pièce moulée,
sachant que des membrures (14), s'étendant radialement, relient ladite première partie tubulaire à ladite seconde partie tubulaire,
sachant notamment que les nervures de renforcement (44) s'achèvent par des membrures (14) s'étendant radialement sur la face intérieure de ladite première partie tubulaire, à l'autre extrémité axiale opposée à l'une des extrémités axiales, ces membrures (14) reliant ladite première partie tubulaire à ladite seconde partie tubulaire,
et présentant des perçages dévolus à des vis de fixation destinées aux boucliers de paliers du moteur du convertisseur, situés sur ladite seconde partie tubulaire.

12. Moteur (1) de convertisseur, selon l'une des revendications 7 à 11,
**caractérisé par le fait que**
l'espace intérieur de la boîte de raccordement est relié à l'espace intérieur de la seconde partie tubulaire par l'intermédiaire d'un canal de raccordement affecté à la traversée des câbles de raccordement du stator,
ledit canal de raccordement (48) étant isolé hermétiquement vis-à-vis dudit canal d'écoulement,
et/ou
qu'il est prévu un frein de maintien (47) doté d'un levier de déblocage manuel,
ledit levier (42) de déblocage manuel traversant un orifice (46) pratiqué dans la première partie tubulaire.
